# EUROPEAN PATENT APPLICATION

(11) **EP 1 870 216 A1**
(43) Date of publication of application: **26.12.2007**
(21) Application number: 06731646.3
(22) Date of filing: 12.04.2006
(51) Int. Cl.: B27M 3/00, A45C 3/02, B27D 1/04, B32B 21/13

(54) **METHOD FOR PRODUCING LAMINATED WOOD AND METHOD FOR PRODUCING LUGGAGE**

(30) Priority: 12.04.2005 JP 2005114951
(71) Applicant: Qurz Inc., Mitaka-shi, Tokyo 1810002 (JP); Ecoasu Umazimura Co., Ltd., Aki-gun, Kochi 7816201 (JP)
(72) Inventor: SHIMAMURA, Takumi c/o Qurz Inc., Mitaka-shi, Tokyo 181-0002 (JP)
(74) Representative: Neath, Susannah Mairi
(86) International application number: PCT/JP2006/307699
(87) International publication number: WO 2006/109824

(57) **Abstract**

The invention provides a method for manufacturing a glue laminated wood material in which wrinkles do not occur even in the case of press molded material. In a glue lamination step in which five or more wood sheets are layered in a layer structure and integrated into a single body with glue, layering in a layer structure is performed in a state such that a grain direction is the same for at least the top two and the bottom two of the wood sheets 1, and the grain direction of one of the wood sheets 2 in the middle is approximately orthogonal to the grain direction of the respective upper and lower two or more wood sheets.

## Description

### Technical Field

The present invention relates to a method for manufacturing a glue laminated wood material and a method for manufacturing a luggage.

### Background Art

With an increasing need for environmental conservation on a global scale, raising and preservation of forests have become an important problem. While planting of new trees is important for raising and preservation of forests, it is also important to take care of trees by trimming unnecessary branches. When doing so, a great amount of thinned wood is generated, and an effective use of that thinned wood is sought. As one method for effectively using thinned wood, there is glue laminated wood material in which thinned wood is used. For example, a method for manufacturing a glue laminated wood material of a predetermined shape has been proposed in which by performing softening treatment on a plurality of pieces of thinned wood, and then performing pressure treatment, in subsequent processing the shape of the thinned wood is not affected even if each piece of thinned wood is bent or the like (Patent Document 1). Also, a wood panel formed by layering combined sheet groups in which a plurality of sheets of sheet material (thinned wood) have been aligned has been proposed in which a rib and a groove that can engage each other are formed in matching faces of the combined sheet groups that overlap each other, and with the rib and the groove engaged, the combined sheet group provided with the rib and the combined sheet group provided with the groove are stacked together such that the sheet materials in adjacent layers are offset from each other (Patent Document 2). Also, a composite glue laminated wood material of bamboo and thinned wood has been proposed that is formed by layering a bamboo glue laminated sheet in which a plurality of pieces of bamboo wood formed sheet-like by laterally or vertically cutting moso bamboo are lined up touching in the lateral direction, and wood material in which thinned wood is formed sheet-like, and bonding the bamboo glue laminated sheets and the wood material with a glue that does not include a substance harmful to a human body (Patent Document 3).

However, conventional glue laminated wood material in which thinned wood is used has an object of use as a building material in houses or the like, and has not been developed with an object of application to goods for daily use. Thus, even when press processing is attempted for use as goods for daily use, there are instances when press processing is not possible, or even if press processing is possible, the appearance is impaired by the occurrence of wrinkles. On the other hand, also in the field of products such as those for daily use, development of wood grain-effect materials with a more natural image has been desired. However, as stated above, with materials employing wood, press processing is difficult, and sewing with another material such as fabric is difficult. Thus, for example, with a conventional sewing method it is not possible to manufacture a luggage from a glue laminated wood material and fabric.

Patent document 1: JP H7-112409A
Patent document 2: JP 2004-142139A
Patent document 3: JP 2004-345299A

### Disclosure of Invention

### Problem to be Solved by Invention

Consequently, it is an object of the present invention to provide a method for manufacturing a glue laminated wood material in which wrinkles do not occur even when press processing is performed, and a method for manufacturing a luggage in which glue laminated wood material and fabric are used as raw materials.

### Means for Solving Problem

In order to solve the above-described problem, the method for manufacturing a glue laminated wood material according to the present invention includes a glue lamination step in which five or more wood sheets are layered in a layer structure and integrated into a single body with glue, wherein in the glue lamination step, layering in a layer structure is performed in a state such that a grain direction is the same for at least the top two and at least the bottom two of the wood sheets, and the grain direction of one wood sheet in the middle is approximately orthogonal to the grain direction of the respective upper and lower two or more wood sheets.

Also, the present invention provides a method for manufacturing a luggage in which two press molded glue laminated wood products, in which an edge portion has been covered with gore fabric, have been linked by fabric in a state facing each other such that a concave face of each press molded glue laminated wood product becomes an inner portion, wherein press molded glue laminated wood products manufactured with the manufacturing method of the present invention are used as the press molded glue laminated wood products, the edge portion is covered by the gore fabric by aligning the gore fabric with the edge portion of the press molded glue laminated wood product and performing sewing with a sewing machine in a state with the gore fabric pressed against with a presser foot, and in the presser foot that is used, a portion that makes contact with the press molded glue laminated wood product has been formed in the shape of a curved face or a curved line.

### Effect of Invention

With the method for manufacturing a glue laminated wood material of the present invention, it is possible to manufacture a glue laminated wood material in which press processing is possible, and in which wrinkles do not occur even when press processing is performed. Also, with the method for manufacturing a luggage according to the present invention, it is possible to sew a glue laminated wood material and fabric, so it is possible to manufacture a luggage from a glue laminated wood material and fabric, In this manner, with the present invention, it is possible to contribute to effective use of thinned wood, and possible to manufacture a manufactured good in which wood is used as a raw material in a good for daily use such as a luggage. Thus, the present invention is effective from the viewpoint of not only environmental conservation, but also from the viewpoint of design and the like.

### Brief Description of Drawings

[FIG. 1] FIG. 1 illustrates an example of a method for manufacturing
a glue laminated wood material of the present invention.
[FIG. 2] FIG. 2 illustrates a conventional method for manufacturing a glue laminated wood material.
[FIG. 3] FIG. 3 is a cross-sectional view that shows a step of attaching an underlining in an example of a method for manufacturing a luggage according to the present invention.
[FIG. 4] FIG. 4 is an exploded perspective view that shows a step of installing various components in the example shown in FIG. 3.
[FIG. 5] FIG. 5 is a perspective view that shows a step of sewing gore fabric in the example shown in FIG. 3.
[FIG. 6] FIG. 6 is a perspective view that shows a step of attaching a gore presser in the example shown in FIG. 3.
[FIG. 7] FIG. 7 is a partial cross-sectional view of an example of a luggage manufactured according to the present invention.

### Description of the Invention

In the glue lamination step of the method for manufacturing a glue laminated wood material according to the present invention, it is preferable that two layered sheets are prepared in which at least two of the wood sheets are layered with the grain direction of the wood sheets aligned and integrated into a single body with glue, and layering is performed with one of the wood sheets disposed between the two layered sheets. The layered sheets include at least two of the wood sheets, preferably two of the wood sheets.

In the method for manufacturing a glue laminated wood material according to the present invention, the thickness of a wood sheet is, for example, in a range of 0.5 to 0.55 mm.

In the method for manufacturing a glue laminated wood material according to the present invention, it is preferable that the wood sheets are manufactured from thinned wood, although the material from which the wood sheets are manufactured is not particularly limited.

The method for manufacturing a glue laminated wood material according to the present invention, preferably further includes a press molding step of press molding an integrated laminated body obtained in the glue lamination step.

In the method for manufacturing a luggage according to the present invention, it is preferable that prior to the machine sewing, an underlining of cloth or nonwoven cloth is affixed to the concave face side of the press molded glue laminated wood product.

Following is a description of one example of the method for manufacturing a glue laminated wood material according to the present invention. The present invention is not limited by the embodiment below.

A description of the reference numerals in the appended drawings is as follows.
- 1, 2: wood sheet
- 3: luggage lining cloth
- 4: pocket
- 5: glue
- 6: press molded product
- 10: press molded product with lining cloth attached
- 11: handle
- 12: fastener
- 13: strip-like canvas
- 14: lower face fastener stopper
- 15: three-corner stopper
- 20: luggage semi-manufactured good
- 21: wrapper
- 22: gore fabric
- 23: presser foot
- 24: sewing perforation
- 25: gore presser

The method for manufacturing a glue laminated wood material according to the present invention, for example, includes the following steps.
(1) cutting wood
(2) sawing lumber (rectangular lumber)
(3) main glue lamination
(4) softening
(5) slicing
(6) drying
(7) re-glue lamination
(8) press molding

### (1) Cutting wood

This is a step of manufacturing source material. The wood used as the source material is not particularly limited, but thinned wood is preferably used. Also, the type of tree is not particularly limited, but for example, it is possible to use natural trees such as cedar, cypress, pine, or the like. Thinned wood of cedar trees is preferable as the source material.

### (2) Sawing lumber

The source material is sawed into rectangular lumber. At this time, it is preferable to perform sawing in the wood's natural form, without drying. This is because when drying is performed, there is a risk that breaking will occur in a later step.

### (3) Main glue lamination

The rectangular lumber is glue laminated, matched to the size of the blade of a slice cutter described below. For example, four pieces of the rectangular lumber are glue laminated so as to become two lateral pieces and two vertical pieces. The glue used in this glue lamination is not particularly limited, but for example, it is possible to use a glue whose trade name is Sumitack GA-601-01, manufactured by Sumitomo Bakelite Co. Ltd. The glue laminated rectangular lumber is pressed while heating with a pressing machine, and melt-bonded with the glue.

### (4) Softening

The glue laminated rectangular lumber is softened by boiling. The boiling is performed until water and heat enter to the core of the wood, and the time for boiling, although not particularly limited, is for example 12 to 16 hours. Prior to boiling, the glue laminated rectangular lumber is laid down and placed in a state allowed to include moisture for a while. The time that the glue laminated rectangular lumber is laid down is not particularly limited, but is for example 16 to 20 hours. Boiling and laying down are preferably performed in the same water tank. After laying down, the glue laminated rectangular lumber is removed from the water tank, and scum attached to the surface is scraped away using a grinder or the like.

### (5) Slicing

Next, the glue laminated rectangular lumber is sliced using a large-sized slicer to manufacture wood sheets. The thickness of a wood sheet is as stated above, for example 0.2 mm. A plurality of the wood sheets are stacked to prepare for drying.

### (6) Drying

The wood sheets are, for example, placed in a high frequency drying furnace and dried. The drying is, for example, preferably performed until the wood sheets have a moisture content of less than 18%.

### (7) Re-glue lamination

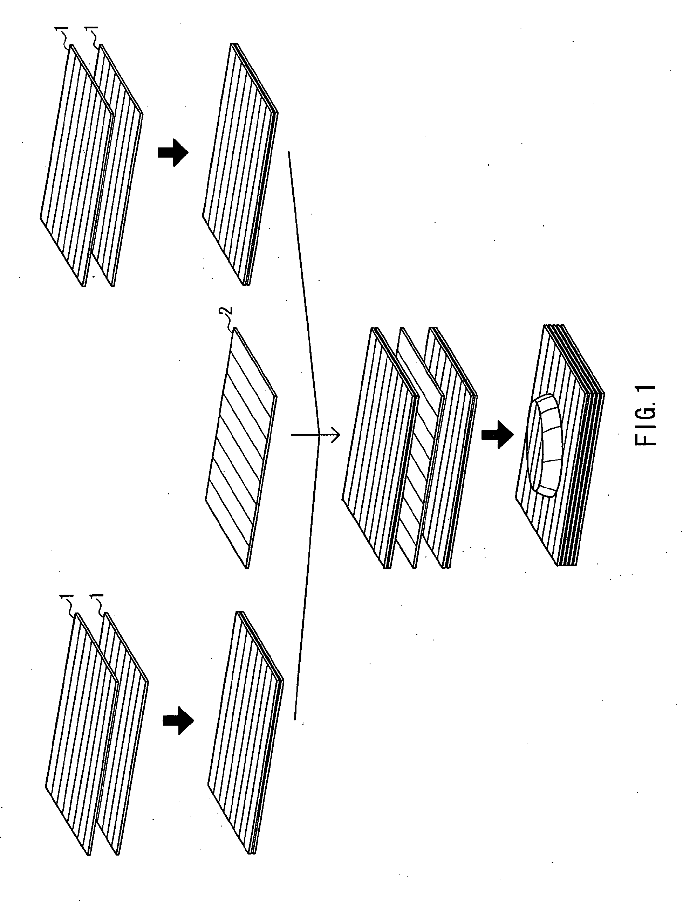

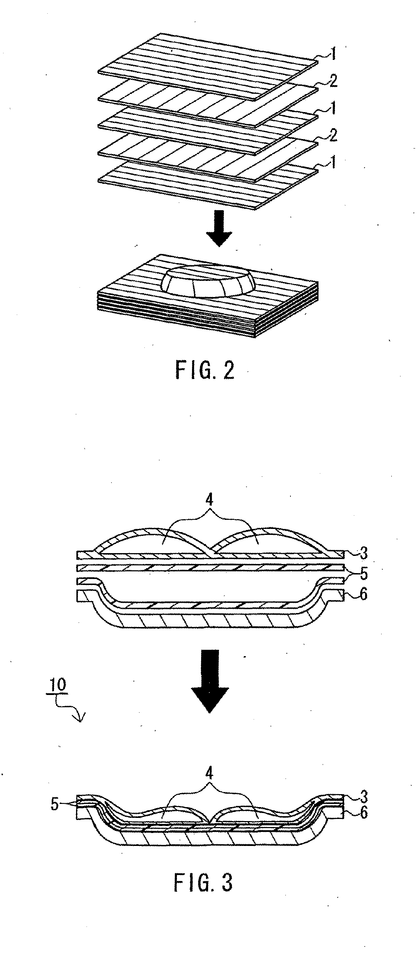

The dried wood sheets are layered and then integrated into a single body with glue. More specifically, layering in a layer structure is performed in a state such that a grain direction is the same for at least the top two and at least the bottom two of the wood sheets, and the grain direction of one wood sheet in the middle is approximately orthogonal to the grain direction of the respective upper and lower two or more wood sheets. In this manner, the glue laminated wood material according to the present invention can be manufactured. By adopting an alignment for the wood grain as stated above, wrinkles do not occur in the glue laminated wood material that is obtained even when press processing is performed. Also, in the glue lamination, as shown in FIG. 1, it is preferable that two layered sheets are prepared in which at least two of the wood sheets 1 are layered with the grain direction of the wood sheets 1 aligned and integrated into a single body with glue, and layering is performed with one of the wood sheets 2 disposed between the two layered sheets. Also, as shown in FIG. 2, with a conventional glue lamination technique, the wood sheets 1 having lateral wood grain and the wood sheet 2 having vertical wood grain are alternately layered. However, with the glue laminated wood material obtained using this method, press processing is difficult, and even if press processing is possible, there is the problem that wrinkles occur.

It is preferable that a glue that does not include harmful chemical substances is used in the glue lamination. For example, a glue whose trade name is H298, manufactured by Nippon NSC Ltd., can be used.

### (8) Press molding

Then, as shown in FIG. 1, the obtained glue laminated wood material is press molded using a mold. With the glue laminated wood material obtained by the manufacturing method of the present invention, as stated above, wrinkles do not occur even when press molding is performed. The mold used for the press molding is not particularly limited, and a mold of various shapes can be used. Also, the conditions for the press molding are, for example, temperature 140°C, press pressure 1.5 t/cm² (1.4709×10⁸Pa), and time about 5 minutes.

The glue laminated wood material obtained in this manner is usable in various applications, and other than use as raw material in a luggage as described below, can be used for example in goods for daily use such as food trays, Japanese fans, and seat cushions, in electronic goods such as calculators, lighting fixtures, and personal computer cases, interior materials of automobiles, furniture such as chairs, and the like.

Next is a description of an example of the method for manufacturing a luggage according to the present invention. The present invention is not limited by the embodiment below.

First, a press molded glue laminated wood product obtained by the manufacturing method of the present invention is prepared. The shape of this press molded product is, for example, that of a round or square tray. Then, as shown in FIG. 3, a luggage underlining canvas 3 provided with two pockets 4 is attached to the inner face of the press molded product 6. This attachment is performed by applying a rubber glue 5 to both the inner face of the press molded product 6 and the back face of the luggage underlining canvas 3. Also, in FIG. 3, reference numeral 10 indicates the press molded product to which the luggage underlining canvas 3 has been attached.

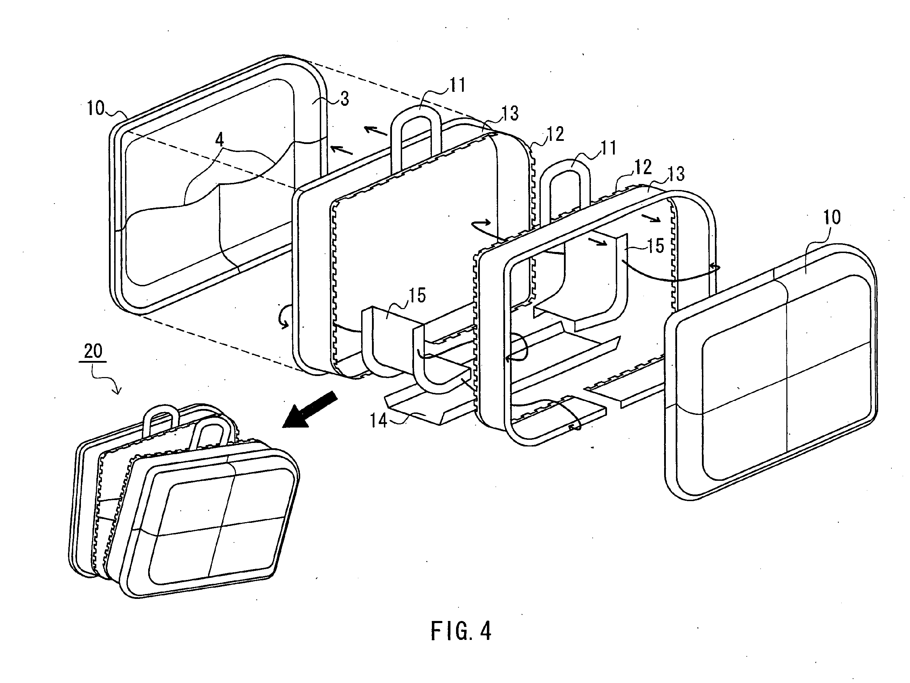

Next, as shown in the exploded perspective view shown in FIG. 4, various components are attached in a state with the two press molded products 10 facing each other such that a concave portion of the press molded products 10 is an inner portion. In FIG. 4, the same portions as in FIG. 3 have the same reference numerals. First, strip-like canvases 13 are attached to an inner side face of each of the press molded products 10 using glue. Also, handles 11 are attached to each of the two strip-like canvases 13 such that the handles 11 are located on an upper face of the luggage. The handles 11 are not particularly limited, but preferably are, for example, leather handles with a paper core. Also, a single W fastener 12 is attached to the two strip-like canvases 13. A lower face fastener stopper 14 is attached using glue at a portion that corresponds to a bottom portion of the luggage. The lower face fastener stopper 14 is located in the lower portion (lower face) of the luggage, and is a piece of fabric that stops opening of the fastener. As shown in FIG. 4, installation of the lower face fastener stopper 14 is performed such that ear portions of the lower face fastener stopper 14 are disposed between the strip-like canvases 13 and the press molded products 10 in a portion where the strip-like canvases 13 contact the press molded products 10. Also, three-corner stoppers 15 are respectively attached at a lower portion of both sides of the luggage. Then three-corner stoppers 15 are a piece of fabric that prevent objects from falling from the sides when the luggage is opened. As shown in FIG. 4, attachment of the three-corner stoppers 15 is performed using double-sided tape such that ear portions of the three-corner stoppers 15 are disposed between the strip-like canvases 13 and the press molded products 10 in a portion where the strip-like canvases 13 contact the press molded products 10. In this manner, a semi-manufactured product 20 of a luggage in which two of the press molded products have been combined is manufactured.

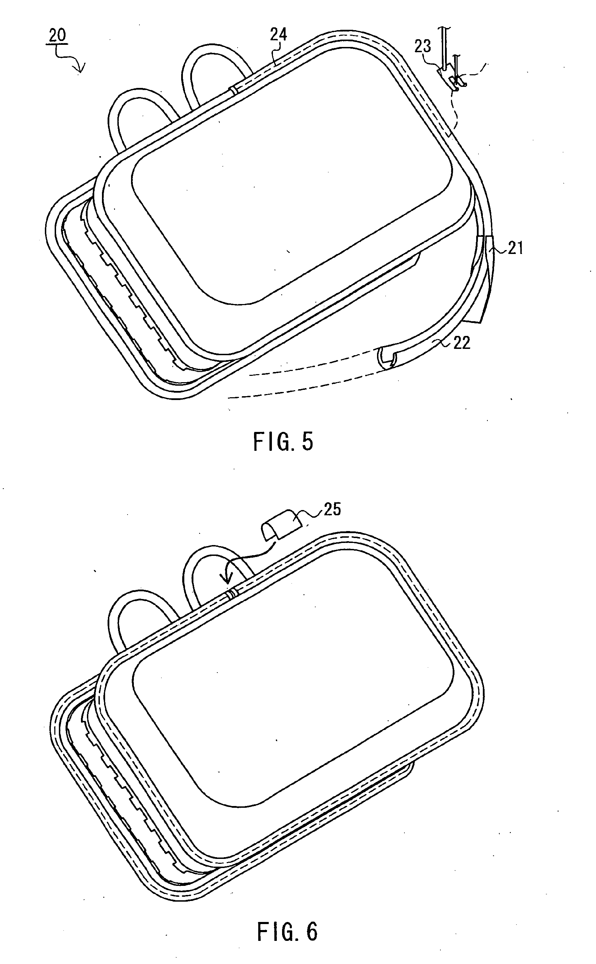

Next, as shown in FIG. 5, in the semi-manufactured good 20, edge portions of the press molded products are covered with a gore fabric 22 by sewing with a sewing machine. In FIG. 5, reference numeral 24 indicates sewing perforations, reference numeral 21 indicates a wrapper, and reference numeral 23 indicates a presser foot in the sewing machine. At a position that corresponds to the handle portions, additional sewing is performed to increase strength. The wrapper 21 is a metal fitting used in order to reel in the gore fabric and cause fabric to converge in front of a sewing machine needle. Also, in the present invention, it is also a distinguishing feature that the press molded glue laminated wood products and fabric can be sewed.

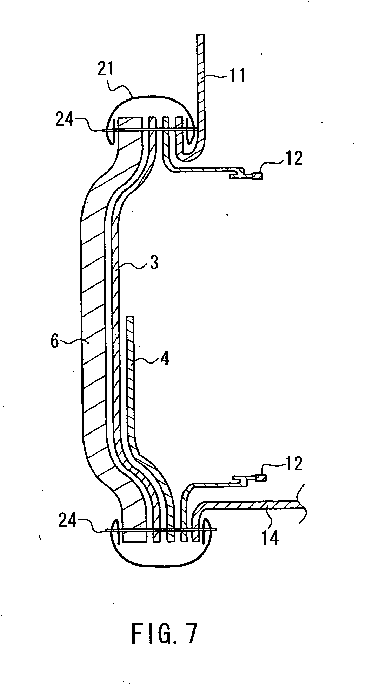

Next, as shown in FIG. 6, both ends of the gore fabric are located at about the center of the upper face of the luggage, and in this portion, a mating concealing leather patch (gore presser) 25 is attached. In this manner, the luggage according to the present invention is manufactured. FIG. 7 shows a cross-sectional view of the luggage according to the present invention. In FIG. 7, the same portions as in FIGS. 3 to 6 have the same reference numerals. As shown in FIG. 7, in this luggage, the main body of the luggage is configured using the press molded product 6, the fastener 12 can be opened/closed, the pocket 4 is formed inside the luggage, and the handle 11 is attached to the upper face of the luggage. As shown in FIG. 7, the canvas 3 is affixed to the rear face of the press molded product 6 at least at a portion where the sewing perforations 24 will be formed. When, in this manner, the canvas 3 is affixed in advance to the rear face of the press molded product 6, the edge portions of the press molded product 6 are enveloped by the gore fabric 22, and when sewing with the sewing machine from the opposite face (front side) to the face where the canvas 3 is affixed, it is possible to suppress breaks in the press molded product 6, which is preferable.

### Industrial Applicability

As described above, according to the method for manufacturing a glue laminated wood material of the present invention, press processing is possible, and it is possible to manufacture a glue laminated wood material in which wrinkles do not occur even when press processing is performed. Accordingly, with the present invention, glue laminated wood material can be applied to various fields, such as products for daily use, and, for example, by applying glue laminated wood material in a luggage, it is possible to manufacture a luggage having an innovative design. Also, with the present invention, it is possible to effectively use thinned wood, and thus it is possible to contribute to environmental conservation.

## Claims

1. A method for manufacturing a glue laminated wood material comprising a glue lamination step in which five or more wood sheets are layered in a layer structure and integrated into a single body with glue, wherein in the glue lamination step, layering in a layer structure is performed in a state such that a grain direction is the same for at least the top two and at least the bottom two of the wood sheets, and the grain direction of one wood sheet in the middle is approximately orthogonal to the grain direction of the respective upper and lower two or more wood sheets.

2. The manufacturing method according to claim 1, wherein in the glue lamination step, two layered sheets are prepared in which at least two of the wood sheets are layered with the grain direction of the wood sheets aligned and integrated into a single body with glue, and layering is performed with one of the wood sheets disposed between the two layered sheets.

3. The manufacturing method according to claim 1 or 2, wherein the thickness of a wood sheet is in a range of 0.5 to 0.55 mm.

4. The manufacturing method according to any of claims 1 to 3, wherein the wood sheets are manufactured from thinned wood.

5. The manufacturing method according to any of claims 1 to 4, further comprising a press molding step of press molding an integrated laminated body obtained in the glue lamination step.

6. A method for manufacturing a luggage in which two press molded glue laminated wood products, in which an edge portion has been covered with a gore fabric, have been linked by fabric in a state facing each other such that a concave face of each press molded glue laminated wood product becomes an inner portion, wherein the press molded glue laminated wood products manufactured with the manufacturing method according to claim 5 is used as the press molded glue laminated wood products,
the method comprising covering the edge portion by the gore fabric by aligning the gore fabric with the edge portion of the press molded glue laminated wood product and performing sewing with a sewing machine in a state with the gore fabric pressed against with a presser foot, the presser foot that is used having a portion that makes contact with the press molded glue laminated wood product has been formed in the shape of a curved face or a curved line.

7. The manufacturing method according to claim 6, wherein prior to performing sewing with the sewing machine, an underlining of cloth or nonwoven cloth further is affixed to the concave face side of the press molded glue laminated wood product.
